# EUROPEAN PATENT SPECIFICATION

(11) **EP 3 483 218 B1**
(45) Date of publication and mention of the grant of the patent: **24.02.2021**
(21) Application number: 17827426.2
(22) Date of filing: 29.06.2017
(51) Int. Cl.: C08L 83/07, B32B 27/00, C08K 5/56, C08L 83/05, D21H 27/00

(54) **SILICONE COMPOSITION, RELEASE PAPER AND RELEASE FILM**
SILIKONZUSAMMENSETZUNG, TRENNPAPIER UND TRENNFOLIE
COMPOSITION DE SILICONE, PAPIER ANTIADHÉSIF ET FILM ANTIADHÉSIF

(30) Priority: 11.07.2016 JP 2016136570; 25.01.2017 JP 2017011230
(43) Date of publication of application: 15.05.2019
(73) Proprietor: Shin-Etsu Chemical Co., Ltd., Tokyo 100-0004 (JP)
(72) Inventor: NAKAYAMA Ken, Annaka-shi Gunma 379-0224 (JP)
(74) Representative: HGF
(86) International application number: PCT/JP2017/023886
(87) International publication number: WO 2018/012296

(56) References cited:
- WO-A1-2015/058398
- JP-A- H09 217 011
- JP-A- 2009 227 976
- JP-A- 2012 207 125
- JP-A- 2012 207 126
- JP-A- 2012 246 359
- JP-A- 2013 170 262

## Description

### TECHNICAL FIELD

The present invention relates to a silicone composition, in particular solvent-free type one, which provides a cured product layer having improved adhesion to a substrate, in particular a plastic film substrate such as a polyester film. It also relates to release paper or a release film having a coating of a cured product of the composition.

### BACKGROUND ART

Conventionally, a coating of a cured product of a silicone composition is formed on a surface of a sheet-like substrate such as paper or a plastic sheet, in order to impart releasability from an adhesive material (for example, a property of being cleanly peeled off from the adhesive material) to the substrate. A method for forming a coating of a cured silicone composition on a substrate surface is described in, for example, JP-A S47-32072 (Patent Literature 1), in which a releasable coating is formed on the substrate surface by the addition reaction between an organopolysiloxane having alkenyl groups and an organohydrogenpolysiloxane in the presence of a platinum-based catalyst.

Examples of the silicone composition curable by the addition reaction to form a coating includes a solvent-type one in which the silicone composition is dissolved in an organic solvent, an emulsion-type one in which the silicone composition is dispersed in water using an emulsifier, and a solvent-free type one which is free of solvent. The solvent-type one is disadvantageously harmful to the human body and the environment. The emulsion-type one requires high energy for water removal. Further, a large amount of the emulsifier remains, so that the resulting cured coating has lower adhesion to the substrate, and causes a problem that an adhesive material exhibits decreased adhesion when it has previously been applied on the release layer of the cured coating and is then peeled off therefrom (hereinafter referred to as "subsequent adhesion"). Therefore, a solvent-free type silicone composition is desirable.

However, conventional solvent-free type silicone compositions have a problem that they show poor adhesion to plastic films such as polyester films and polypropylene films, although they show good adhesion to paper substrates.

The adhesion of the solvent-free type silicone composition to the film substrate may be improved by, for example, a method of incorporating a silane coupling agent into a silicone composition, or a method of subjecting the surface of a substrate to an adhesion-enhancing treatment or a plasma treatment prior to application of the composition. However, solvent-free type silicone compositions containing a silane coupling agent are still unsatisfactory in adhesion to the substrate. On the other hand, the method of surface treatment of a substrate has a disadvantage that additional process steps are required.

JP-A 2011-252142 (Patent Literature 2) describes a method wherein a silicone composition comprising a low-molecular weight siloxane containing alkenyl groups is subjected to ultraviolet irradiation and then to heating to thereby improve its adhesion to a substrate without affecting the release properties. However, this method requires a UV irradiation apparatus along with a dryer for heating.

JP-A 2011-132532 (Patent Literature 3) describes a method for enhancing adhesion of a silicone composition to a substrate using a small amount of an additive, in particular by the addition of an organopolysiloxane having epoxy groups. However, this document describes only solvent-type silicone compositions in the Examples, and is silent on subsequent adhesion after the adhesive material is peeled off from the release layer.

JP-A H06-220327 (Patent Literature 4) discloses a solvent-free silicone composition comprising a base polymer having RSiO_{3/2} units and, thus, a branched structure, and describes that the silicone composition shows improved adhesion between the resulting cured coating and a substrate. While the adhesion to an OPP (oriented polypropylene) film is improved, the adhesion to a polyester-based film substrate is still unsatisfactory.

JP-A 2010-500462 (Patent Literature 5) describes that a reaction product of a fluid polyorganosiloxane containing alkenyl group(s) and silanol group(s) with a hydrolysable silane containing epoxide group(s) is added to a solvent-free silicone composition to thereby enhance adhesion of the cured coating to a substrate. However, in all of the Examples, the specific organopolysiloxane containing Q units (SiO_{4/2}) and alkenyl groups was used to obtain the reaction product, and the specification is silent on the subsequent adhesion after the adhesive material is peeled off from a release layer.

### LIST OF THE PRIOR ART

### Patent Literatures

Patent Literature 1: JP-A S47-32072
Patent Literature 2: JP-A 2011-252142
Patent Literature 3: JP-A 2011-132532
Patent Literature 4: JP-A H06-220327
Patent Literature 5: JP-A 2010-500462

WO2015/058398 discloses a solvent-free composition for a release layer comprising two alkenyl-functional organopolysiloxanes, an organohydrogenpolysiloxane with alkyl or phenyl groups, and a hydrosilylation catalyst. The organohydrogenpolysiloxane preferably comprises at least three silicon-bonded hydrogen groups per molecule.

### SUMMARY OF THE INVENTION

As described above, there is not known a solvent-free type silicone composition which is capable of providing a cured coating that has excellent adhesion to a film substrate and allows an adhesive material to retain high adhesion after the adhesive material is peeled off from the cured coating.

In view of the circumstances described above, the present invention aims to provide a solvent-free type silicone composition capable of providing a cured coating that has excellent adhesion to a substrate, in particular to a plastic film substrate, and that allows an adhesive material to retain high adhesion after the adhesive material is peeled off from the cured coating. It also aims to provide release paper and a release film having such a cured coating.

Through extensive research to attain the purpose, the present inventor has found that the purpose can be attained by specifying, in an addition curable silicone composition comprising an alkenyl-group-containing organopolysiloxane and an organohydrogenpolysiloxane, a difference in the aryl-group contents between the organohydrogenpolysiloxane and the alkenyl group-containing organopolysiloxane, has completed the invention. As used herein, the term "aryl group" means an aryl group bonded to a silicon atom and an aryl group present in an aralkyl group bonded to a silicon atom. Examples of the aryl group present in an aralkyl group include phenyl groups present in benzyl (i.e., phenylmethyl) or phenethyl (i.e., phenylethyl) groups.

Thus, the present invention provides a silicone composition comprising:
(A) an organopolysiloxane having at least two alkenyl groups each bonded to a silicon atom in a molecule, and having no or at least one aryl group in a molecule
(B1) an organohydrogenpolysiloxane having at least three hydrogen atoms each bonded to a silicon atom in a molecule, and having an aryl group in such a number that a percentage (%) of the total number of the aryl groups relative to the total number of hydrogen atoms and groups each bonded to a silicon atom (hereinafter referred to as "percentage of the aryl group") is at least 8%, in an amount such that a ratio of the number of SiH groups in component (B1) to the number of alkenyl groups in component (A) is between 0.5 and 10; and
(C) a catalytic amount of a catalyst based on a platinum group metal; with a proviso that [said percentage (%) of the aryl group in component (B1)] - [a percentage (%) of the total number of the aryl groups relative to the total number of groups each bonded to a silicon atom in component (A)] ≥ 8.

The present invention also provides release paper or a release film comprising a layer of a cured product of the silicone composition.

According to the present invention, the silicone composition, in particular, of a solvent-free type, provides a cured coating having excellent adhesion to a substrate, in particular to a plastic film substrate. It also allows an adhesive material that has previously been applied on a release layer of the cured coating to retain high adhesion after the adhesive material is peeled off from the cured coating. That is, it can provide a cured coating with excellent non-tackiness.

### DESCRIPTION OF PREFERABLE EMBODIMENTS

The present invention will be described in more detail.

As used herein, the term "subsequent adhesion" refers to a percentage of adhesion strength remained in an adhesive material after removed from a release layer of the cured coating of the invention, relative to adhesion strength of the adhesive material before applied on the release layer.

### [(A) Organopolysiloxane Having Alkenyl Groups]

Component (A) is an organopolysiloxane having at least two alkenyl groups each bonded to a silicon atom in a molecule, and having no or at least one aryl group in a molecule. As described above, the aryl group is an aryl group bonded to a silicon atom and an aryl group present in an aralkyl group bonded to a silicon atom. The organopolysiloxane may be any alkenyl-group-containing organopolysiloxane conventionally used in addition-curable silicone compositions known in the art.

Component (A) is preferably represented by the following general formula (3). The organopolysiloxane may be used alone, or in combination of two or more thereof. It should be noted that the sequence of each siloxane units shown below in parentheses is for illustrative purposes only, and is not limited thereto or thereby.

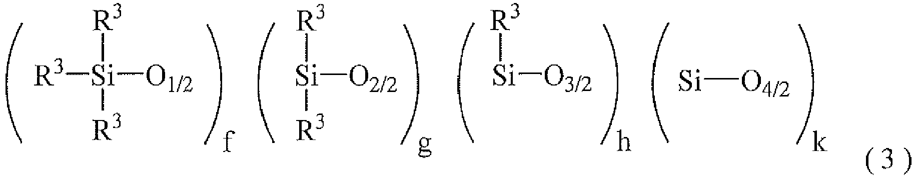

In the formula (3) above, R³ is, independently at each occurrence, a hydroxyl group, a substituted or unsubstituted monovalent hydrocarbon group having no aliphatic unsaturated bond, an alkenyl group having 2 to 12 carbon atoms, or a monovalent hydrocarbon group containing alkenyl group(s) having 2 to 12 carbon atoms and optionally containing oxygen atom(s). The organopolysiloxane has at least two alkenyl groups per molecule.

The monovalent hydrocarbon group having no aliphatic unsaturated bond preferably has 1 to 10 carbon atoms. Examples thereof include alkyl groups, preferably of 1 to 6 carbon atoms, such as methyl, ethyl, propyl and butyl groups; cycloalkyl groups, preferably of 5 to 8 carbon atoms, such as a cyclohexyl group; aryl groups, preferably of 6 to 10 carbon atoms, such as phenyl and tolyl groups; aralkyl groups, preferably of 7 to 10 carbon atoms, such as a benzyl group; and derivatives thereof in which a part or all of hydrogen atoms bonded to the carbon atom(s) are substituted with a substituent, such as a hydroxyl or cyano group, a halogen atom, or an alkoxysilyl, polyoxyalkylene, epoxy or carboxyl group. In view of the releasability, alkyl and aryl groups are preferred, and methyl, ethyl, propyl and phenyl groups are particularly preferred.

In a case where the organopolysiloxane has at least one aryl group bonded to a silicon atom or an aryl group present in an aralkyl group bonded to a silicon atom, the content of the aryl group, including such present in an aralkyl group, is preferably such that the percentage (%) of the number of the aryl groups, including those present in aralkyl groups, relative to the total number of the groups (e.g., R³ in formula (3) shown above) each bonded to a silicon atom is between 0.5% and 50%, more preferably between 0.5% and 40%. If the percentage of the aryl group exceeds the upper limit indicated above, the resulting composition may show poor curability.

Examples of the alkenyl group include alkenyl groups, such as vinyl, allyl, hexenyl and octenyl groups; and cycloalkenylalkyl groups, such as cyclohexenylethyl group. Examples of the monovalent hydrocarbon group containing alkenyl group(s) and optionally oxygen atom(s) include acryloylalkyl and methacryloylalkyl groups, such as acryloylpropyl, acryloylmethyl and methacryloylpropyl groups. Those may optionally have an ether bond in a methylene chain, e.g., -(CH₂)₂-O-CH₂-CH=CH₂ and -(CH₂)₃-O-CH₂-CH=CH₂. Among these, a vinyl group is preferred from an industrial point of view.

The organopolysiloxane (A) has at least two alkenyl groups per molecule. Preferably, the organopolysiloxane has 2 to 500 alkenyl groups, more preferably 2 to 400 alkenyl groups. If the organopolysiloxane has no or one alkenyl group, it is quite likely that uncrosslinked molecules remain after curing of the composition, resulting in lower curability. If the organopolysiloxane has more than 500 alkenyl groups, release may require a stronger force, and the subsequent adhesion may decrease.

In the formula (3) above, f is an integer of at least 2, preferably from 2 to 300, g is an integer of at least 1, preferably from 30 to 20,000, h is an integer of at least 0, preferably from 0 to 100, k is an integer of at least 0, preferably from 0 to 100, with a proviso that 30≤f+g+h+k≤20,000, preferably 50≤f+g+h+k≤15,000. If the value of f+g+h+k is less than the lower limit indicated above, the resulting composition may show poor coatability. If the value exceeds the upper limit indicated above, the composition may cause misting at a coating roll of a coating apparatus in high-speed coating of the composition on the substrate surface.

Preferably, component (A) has a viscosity at 25°C in the rage of from 50 mPa·s to 10,000 mPa·s, in particular from 50 mPa·s to 5,000 mPa·s. If necessary, an organopolysiloxane having a viscosity of 10,000 mPa·s to, in a 30% solution in toluene, 50,000 mPa·s may be additionally used. In a case where two or more organopolysiloxanes are used in combination, it is preferable that component (A) as a whole has a viscosity of at most 10,000 mPa·s. If the viscosity exceeds this limit, the coatability of the composition may deteriorate. It should be noted that the viscosity herein may be determined with a rotational viscometer (hereinafter the same).

Non-limiting examples of the organopolysiloxane (A) are shown below. In the formulas shown below, Me, Vi and Ph stand for methyl, vinyl and phenyl groups, respectively. It should be also noted that the sequence of the siloxane units in parentheses is for illustrative purposes only, and is not limited thereto or thereby. 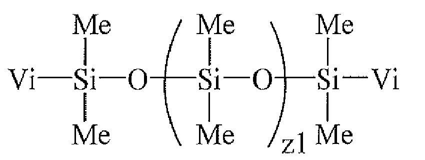 (30≤z1≤2,500) 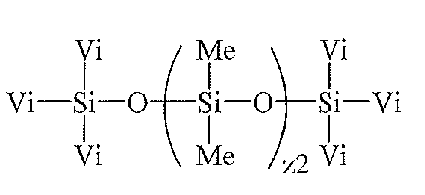 (30≤z2≤10,000) 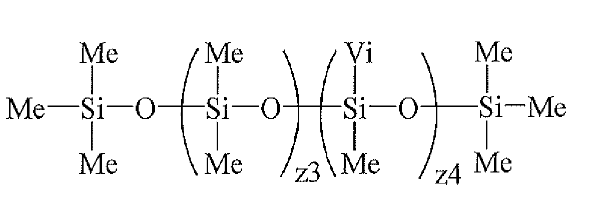 (30≤z3≤19,000, 2≤z4≤500) 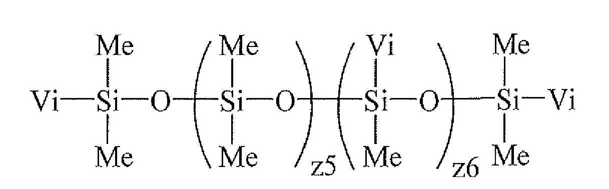 (30≤z5≤19,000, 1≤z6≤498) 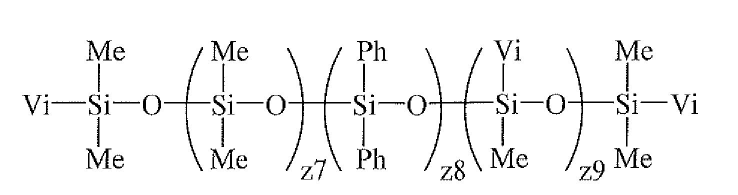 (1≤z7≤19,000, 1≤z8≤500, 1≤z9≤498) 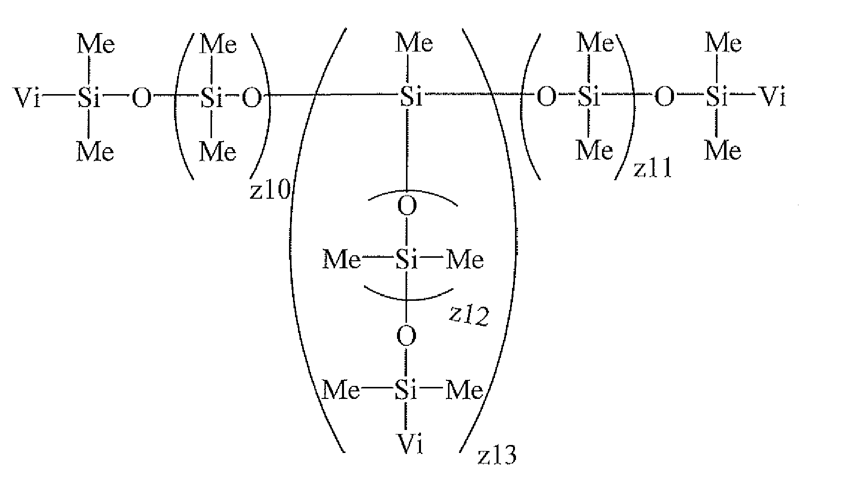 (0≤z10≤1,000, 0≤z11≤1,000, 0≤z12≤1,000, 1≤z13≤100) 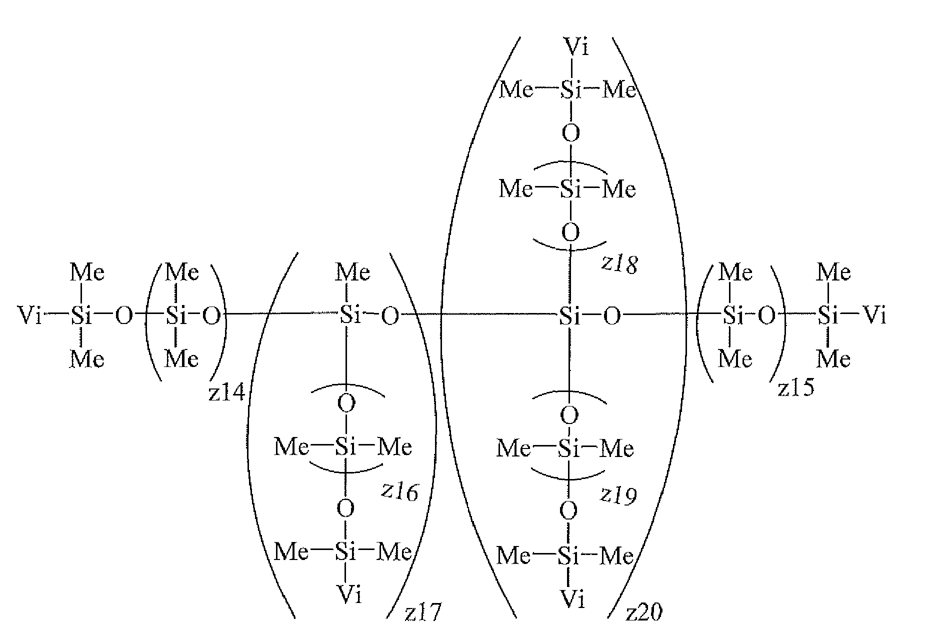 (0≤z14≤500, 0≤z15≤500, 0≤z16≤500, 0≤z17≤100, 0≤z18≤500, 0<z19≤500, 1≤z20≤100)

### [(B) Organohydrogenpolysiloxane]

Component (B) is an organohydrogenpolysiloxane having at least three hydrogen atoms each bonded to a silicon atom in a molecule. According to the present invention, the silicone composition is characterized by comprising, as one of component (B), (B1) the organohydrogenpolysiloxane having at least three hydrogen atoms each bonded to a silicon atom in a molecule and having the specific amount of an aryl group. As described above, the aryl group is an aryl group bonded to a silicon atom and an aryl group present in an aralkyl group bonded to a silicon atom. The present silicone composition may comprise, in addition to component (B1), (B2) an organohydrogenpolysiloxane having at least three hydrogen atoms each bonded to a silicon atom in a molecule and having no aryl group. In a case where the composition comprises component (B2), the amount of component (B2) relative to 100 parts by mass of components (B1) and (B2) may be from 1 to 80 parts by mass, preferably from 1 to 70 parts by mass, more preferably from 1 to 50 parts by mass, still more preferably from 1 to 30 parts by mass, and even more preferably from 1 to 20 parts by mass.

Curing occurs through the addition reaction between the SiH groups in the organohydrogenpolysiloxane (B) (i.e., (B1) and (B2)) and the alkenyl groups in component (A), resulting in the formation of a coating. The proportion of component (B) is such that the ratio of the number of the SiH groups in component (B) to the number of alkenyl groups in component (A) is between 0.5 and 10, preferably between 1 and 8, still more preferably between 1.5 and 6, especially preferably between 1.8 and 6, in particular more than 2.0 up to 5. If the ratio is less than the lower limit indicated above, the resulting cured coating may have low adhesion to the substrate. If the ratio exceeds the upper limit indicated above, the resulting cured coating may be tight release (i.e., requiring a larger force to release the adhesive material from the cured coating), leading to decrease in the adhesion remaining in the adhesive material. In a case where component (B2) is present, the ratio of the total number of the SiH groups in components (B1) and (B2) to the number of the alkenyl groups in component (A) is between 0.5 and 10, preferably between 1 and 8, still more preferably between 1.5 and 6. In this case, a ratio of the number of SiH groups in component (B1) to the number of alkenyl groups in component (A) is preferably at least 1.5, especially preferably at least 1.8, in particular more than 2.0.

Component (B1) has aryl groups so that the percentage (%) of the total number of the aryl groups relative to the total number of hydrogen atoms and groups each bonded to a silicon atom (hereinafter referred to as "percentage of the aryl group") is at least 8%, preferably from 9 to 60%, and more preferably from 10 to 50%. If the percentage of the aryl group is less than the lower limit indicated above, good adhesion to the substrate may not be attained in the cured coating. As mentioned above, the number of the aryl groups includes the number of aryl groups in aralkyl groups. Examples of the group bonded to a silicon atom include a hydroxyl group, alkyl groups, aryl groups, aralkyl groups, and alkyl groups substituted with, e.g., halogen atom(s), and more specifically, groups represented by R¹ as described below.

According to the present invention, the composition is characterized in that the percentage (%) of the aryl group in component (B1) is greater than the percentage (%) of the total number of the aryl groups relative to the total number of groups each bonded to a silicon atom in component (A) by at least 8%, that is, [percentage (%) of the aryl group in component (B1)] - [percentage (%) of the total number of the aryl groups relative to the total number of groups each bonded to a silicon atom in component (A)] ≥ 8. Preferably, the difference is at least 8.5%, more preferably at least 9%, and most preferably at least 10%. Although there is no particular upper limit on the difference, the difference is preferably at most 50%, more preferably at most 40%, more preferably at most 30%, and most preferably at most 25%. The cured coating thus obtained has improved adhesion to the substrate. It is believed that this is because component (B1), which has a larger number of the aryl groups than component (A) as specified above, has low compatibility with component (A) and is, therefore, localized near the substrate as the crosslinking reaction proceeds. In particular, it becomes possible to localize a larger amount of component (B1) in the vicinity of the substrate by the use of an excess amount of component (B1), resulting in improved adhesion to the substrate. The SiH groups in component (B1) are believed to interact with functional groups present on the substrate surface. In particular, in a case where the substrate is a plastic film, π-electrons of the aryl groups in component (B1) interact with π-electrons in the aromatic ring of the plastic, thereby improving the adhesion by the stacking effect.

The organohydrogenpolysiloxane (B1) may be represented by, e.g., the following average compositional formula:

R¹ₐH_{b}SiO(_{4-a-b})_{/2} (1)

wherein R¹ is, independently at each occurrence, a hydroxyl group or a substituted or unsubstituted monovalent hydrocarbon group having no aliphatic unsaturated bond, with a proviso that R¹ includes aryl groups so that the percentage of the total number of aryl groups relative to the total number of R¹ and hydrogen atoms each bonded to a silicon atom is at least 8%, a and b are the number greater than 0, provided that a+b≤3.

Examples of the monovalent hydrocarbon group include alkyl groups, preferably of 1 to 6 carbon atoms, such as methyl, ethyl, propyl and butyl groups; cycloalkyl groups, preferably of 5 to 8 carbon atoms, such as cyclohexyl group; aryl groups, preferably of 6 to 10 carbon atoms, such as phenyl and tolyl groups; aralkyl groups, preferably of 7 to 10 carbon atoms, such as benzyl group; and monovalent hydrocarbon groups having 1 to 10 carbon atoms in which at least a part of the hydrogen atoms each bonded to a carbon atom of the aforementioned groups are substituted with a substituent, such as a hydroxyl or cyano group, a halogen atom, or an alkoxysilyl, polyoxyalkylene, epoxy or carboxyl group. At least one R¹ group is an aryl or aralkyl group, preferably an aryl group. Among these, alkyl and aryl groups are preferred, with methyl, ethyl, propyl and phenyl groups being more preferred.

Preferably, a is the number in the range of from 0.1 to 2, b is the number in the range of from 0.1 to 3, and, in particular, a and b satisfy 0.5<a+b≤2.9.

Examples of the organohydrogenpolysiloxane represented by the formula (1) include polymers or copolymers comprising at least one out of R¹HSiO_{2/2} unit, HSiO_{3/2} unit and R¹₂HSiO_{1/2} unit, and optionally at least one out of R¹₂SiO_{2/2} unit, R¹SiO_{3/2} unit and R¹₃SiO_{1/2} unit, wherein R¹ is as defined above. It preferably comprises at least three units, more preferably at least five units, selected from R¹HSiO_{2/2} unit and R¹2HSiO_{1/2} unit, in one molecule. It may further comprise SiO_{4/2} unit in such an amount that the benefits of the invention are not impaired.

The organohydrogenpolysiloxane comprise 3 to 1,000 SiH groups, more preferably 5 to 800 SiH groups, per molecule. If the number of the SiH group is less than 3 or exceeds 1,000, the curability or the adhesion may be worse.

The organohydrogenpolysiloxane (B1) may be either of straight chain, branched chain or cyclic, or a mixture thereof. This organohydrogenpolysiloxane is preferably represented by the following formula (2): 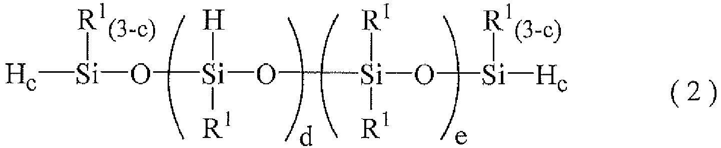 wherein R¹ is as defined above, c is 0 or 1, d is an integer of 1 or more, e is an integer of 0 or more, with a proviso that 2c+d≥3 and 1≤d+e≤1,000, It should be noted that the sequence of the siloxane units shown in parentheses is for illustrative purposes only, and is not limited thereto or thereby.

Preferably, d is an integer of from 5 to 1,000, e is an integer of from 0 to 1,000, and c, d and e preferably satisfy 5≤2c+d≤1,000 and 5≤d+e≤1,000.

Component (B1) preferably has a viscosity at 25°C of from 0.001 to 10 Pa·s, in particular from 0.005 to 5 Pa·s. If the viscosity is too low, the curability may be worse. Whereas, if it is too high, the workability may decline.

Non-limiting examples of component (B1) are shown below. In the formulas shown below, Me and Ph stand for methyl and phenyl groups, respectively. It should be also noted that the sequence of the siloxane units shown below in parentheses is for illustrative purposes only, and is not limited thereto or thereby. 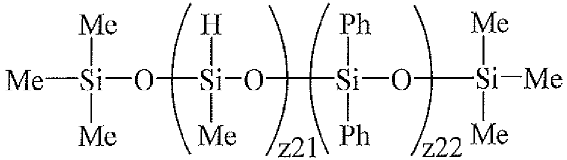 (5≤z21≤1,000, 1≤z22≤500, 6≤z21+z22≤1,000) 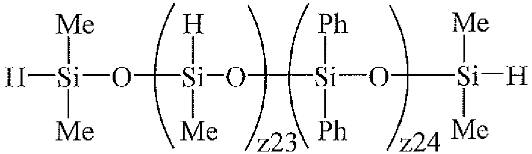 (1≤z23≤998, 1≤z24≤500, 2≤z23+z24≤1,000) 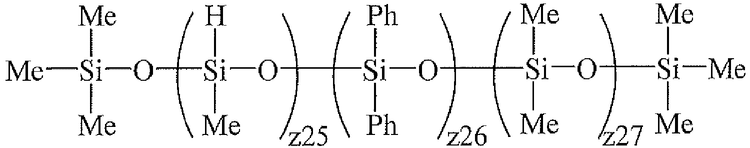 (3≤z25≤1,000, 1≤z26≤400, 1≤z27<400, 5≤z25+z26+z27≤1,000) 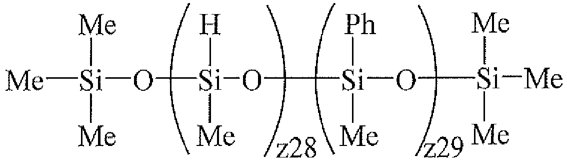 (3≤z28≤1,000, 2≤z29≤800, 5≤z28+z29≤1,000) 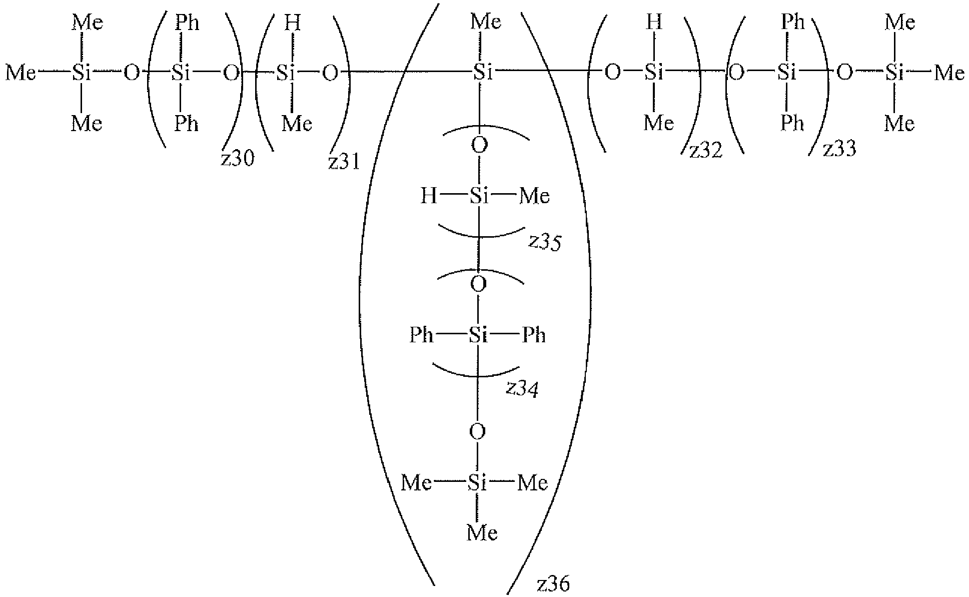 (0≤z30≤100, 0≤z31≤100, 0≤z32≤100, 0≤z33≤100, 0≤z34≤100, 0≤z35≤100, 0≤z36≤100) 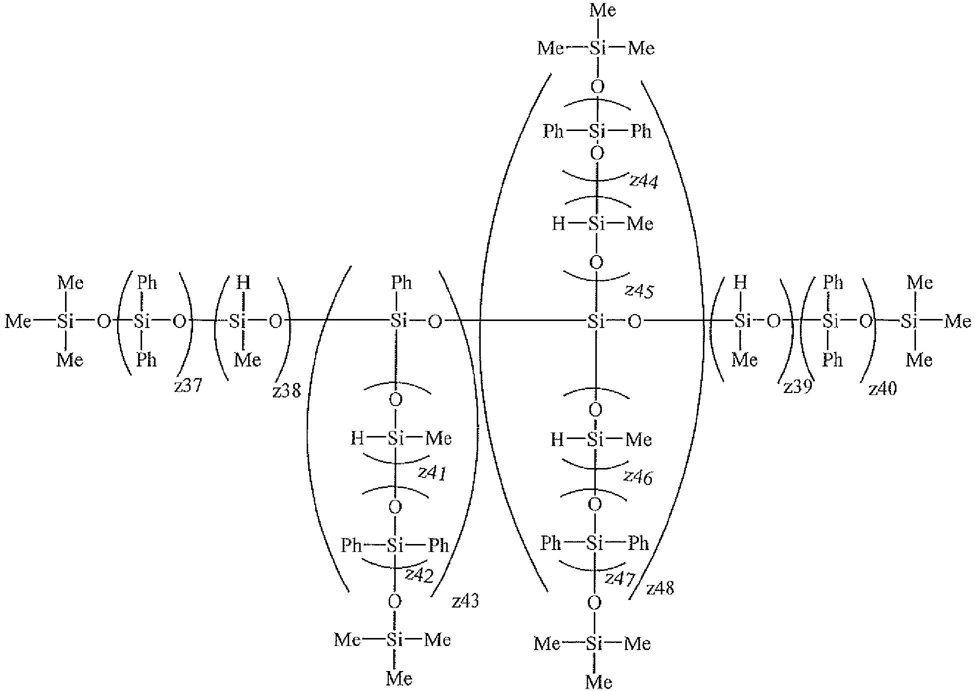 (0≤z37≤100, 0≤z38≤100, 0≤z39≤100, 0≤z40≤100, 0≤z41≤100, 0≤z42≤100, 0≤z43≤100, 0≤z44≤100, 0≤z45≤100, 0≤z46≤100, 0≤z47≤100, 0≤z48≤100)

Component (B2) is an organohydrogenpolysiloxane having at least three hydrogen atoms each bonded to a silicon atom in a molecule and having no aryl group. This component may be represented by, e.g., the following average compositional formula (4):

R⁴ⱼHₖSiO_{(4-j-k)/2} (4)

In the formula (4) above, R⁴ is, independently at each occurrence, a hydroxyl group or a substituted or unsubstituted monovalent hydrocarbon group having no aliphatic unsaturated bond, provided that R⁴ is neither aryl nor aralkyl group. Examples of the monovalent hydrocarbon group include alkyl groups, preferably, of 1 to 6 carbon atoms, such as methyl, ethyl, propyl and butyl groups; cycloalkyl groups, preferably of 5 to 8 carbon atoms, such as cyclohexyl group; and monovalent hydrocarbon groups having 1 to 10 carbon atoms in which at least a part of the hydrogen atoms each bonded to a carbon atom of the aforementioned groups are substituted with a substituent, such as a hydroxyl or cyano group, a halogen atom, or an alkoxysilyl, polyoxyalkylene, epoxy or carboxyl group. Among these, alkyl groups are preferred, with a methyl group being more preferred in view of enhancing the rate of the addition reaction.

In the formula (4) above, j is the number that satisfies j>0, preferably from 0.1 to 2.0, k is the number that satisfies k>0, preferably from 0.1 to 3, with a proviso that 0≤j+k≤3, in particular 0.5<j+k≤2.9.

The organohydrogenpolysiloxane (B2) may be either of straight chain, branched chain or cyclic, or a mixture thereof. Examples of the organohydrogenpolysiloxane include polymers or copolymers comprising at least one out of R⁴HSiO_{2/2} unit, HSiO_{3/2} unit and R⁴₂HSiO_{1/2} unit, and optionally at least one out of R⁴₂SiO_{2/2} unit, R⁴SiO_{3/2} unit and R⁴₃SiO_{1/2} unit, wherein R⁴ is as defined above. It preferably comprises at least three units, more preferably at least five units, selected from R⁴HSiO_{2/2} unit and ^{R4}₂HSiO_{1/2} unit, in one molecule. It may further comprise SiO_{4/2} unit in such an amount that the benefits of the invention are not impaired.

The organohydrogenpolysiloxane comprise 3 to 300 SiH groups, more preferably 5 to 200 SiH groups, per molecule. If the number of the SiH group is less than 3 or exceeds 300, the curability or the adhesion between the substrate and the cured coating may be worse.

Component (B2) preferably has a viscosity at 25°C of from 0.001 to 10 Pa·s, in particular from 0.005 to 5 Pa·s. If the viscosity is too low, the curability may be deteriorated. Whereas, if it is too high, the workability may decline.

Non-limiting examples of component (B2) are shown below. In the formulas shown below, Me stands for a methyl group. It should be also noted that the sequence of the siloxane units shown below in parentheses is for illustrative purposes only, and is not limited thereto or thereby. 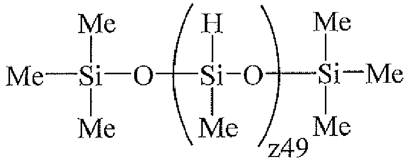 (3≤z49≤300) 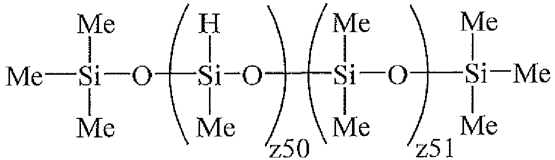 (3≤z50≤300, 1≤z51≤500) 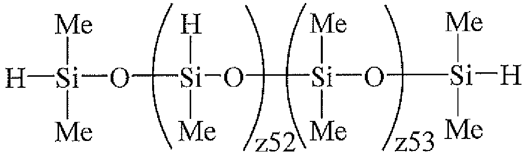 (1≤z52≤298, 1≤z53≤500) 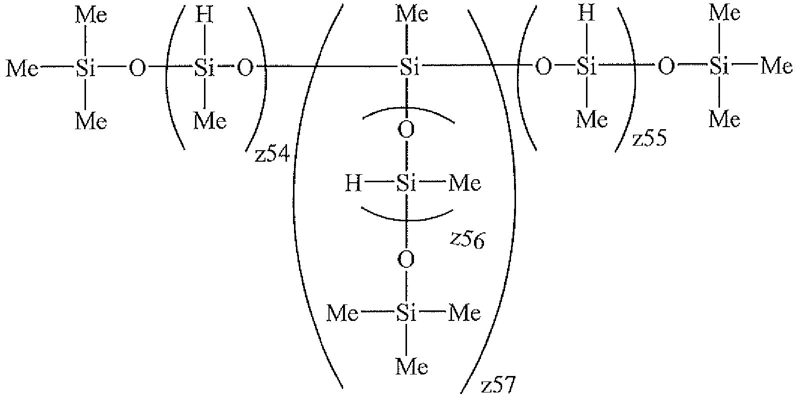 (0≤z54≤100, 0≤z55≤100, 0≤z56≤100, 1≤z57≤49) 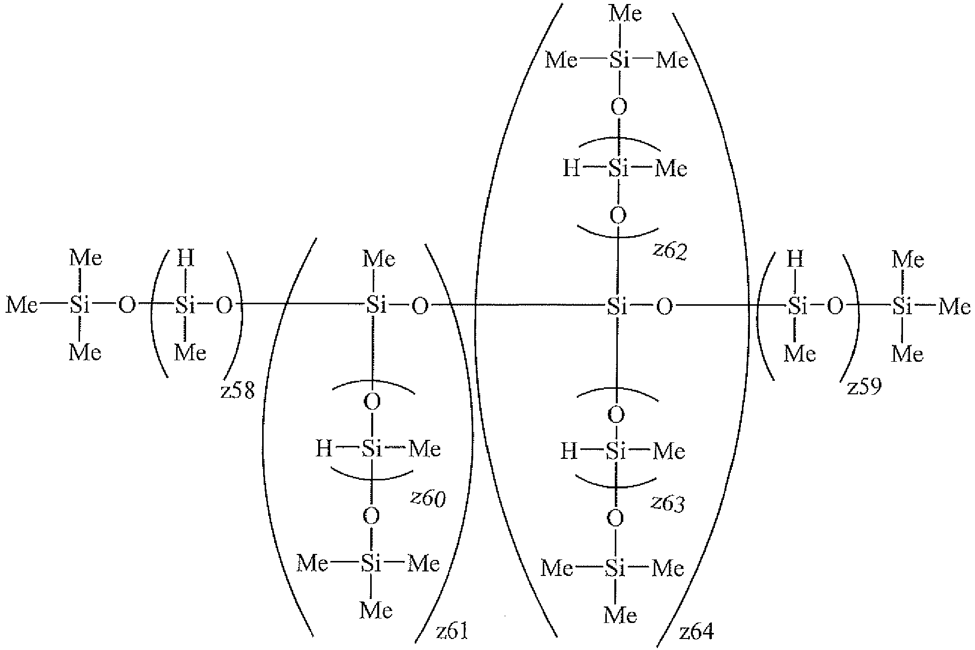 (0≤z58≤100, 0≤z59≤100, 0≤z60≤100, 0≤z61≤50, 0≤z62≤100, 0≤z63≤100, 1≤z64≤50)

### [(C) Catalyst based on a Platinum Group Metal]

Component (C) is a catalyst for promoting the addition reaction between components (A) and (B). The catalyst may be any catalyst that promotes the so-called hydrosilylation, such as those known in the art. Examples of the catalyst based on a platinum group metal include platinum-based catalysts, palladium-based catalysts, rhodium-based catalysts and ruthenium-based catalysts. Among these, platinum-based catalysts may be preferred. Examples of the platinum-based catalyst include chloroplatinic acid, an alcohol or aldehyde solution of chloroplatinic acid, and complexes of chloroplatinic acid with a variety of olefins or vinylsiloxanes.

Component (C) may be used in a catalytic amount. As used herein, the term "catalytic amount" is intended to mean an effective amount for promoting the addition reaction between component (A) and component (B), i.e., components (B1) and optionally (B2). To obtain a good cured coating, it preferably ranges from 1 to 5,000 ppm by mass, in particular from 20 to 1,000 ppm by mass, of a platinum group metal, based on the combined mass of components (A) and (B).

### [Other Optional Components]

According to the present invention, the silicone composition may be obtained by blending components (A) to (C) in the proportions described above. In addition to components (A) to (C), one or more other components may be added, if necessary, in so far as the benefits of the invention are not impaired. Such other components may be any ingredients conventionally used in silicone compositions for release applications. Those well known in the art may be added in an ordinary amount. For instance, a variety of organonitrogen compounds, organophosphorus compounds, acetylenic compounds, oxime compounds and organochlorine compounds may be used as a pot life extender.

More specific examples include acetlylenic alcohols, such as 3-methyl-1-butyn-3-ol, 3,5-dimethyl-1-hexyn-3-ol, 3-methyl-1-penten-3-ol, and phenylbutynol; acetylenic compounds, such as 3-methyl-3-1-penten-1-yne, 3,5-dimethyl-1-hexyn-3-yne; reaction products of these acetylenic compounds with alkoxysilanes or siloxanes or hydrogensilanes; vinylsiloxanes, such as tetramethylvinylsiloxane cyclics; organonitrogen compounds such as benzotriazole; and other organophosphorus compounds, oxime compounds and organochlorine compounds. These compounds may be used in any suitable amount for providing a good pot life, preferably from 0.01 to 10 parts by mass, more preferably 0.05 to 5parts by mass, relative to 100 parts by mass of the total of components (A) and (B).

If necessary, other additives known in the art, including antioxidant, pigments, stabilizers, antistatic agents, antifoaming agents, adhesion promoters, thickeners, solvents, and inorganic fillers such as silica may be further added in so far as the benefits of the invention are not impaired.

There is no particular limitation on a method for preparing the silicone composition. Preferably in view of the pot life, components (A) and (B) and optional components are homogeneously mixed in advance, and component (C) is admixed immediately before the use.

According to the invention, the silicone composition may be applied on a surface of the substrate, and cured to form a cured coating on the substrate surface. This imparts releasability for a substrate to be cleanly peeled off from the adhesive material. After a substrate having a release layer of the cured product of the present silicone composition is laminated with an adhesive material, the adhesive material can be peeled off from the release layer without deteriorating the subsequent adhesion of the adhesive material. The silicone composition may be applied on the substrate surface in any method known in the art, for example, with a coater, such as comma coater, lip coater, roll coater, die coater, knife coater, blade coater, rod coater, kiss coater, gravure coater, and wire bar coater, or by a coating technique such as screen coating, dip coating and cast coating. The silicone composition may be applied on one or both surfaces of a sheet-like substrate, such as paper or film, using the method as described above. Typically, the coated amount of the silicone composition may be 0.01 to 100 g/m². Curing may be carried out under conditions known in the art. Typically, the curing condition includes from 1 to 120 seconds at a temperature of from 50 to 200°C. In a case where release layers are formed on both surfaces of the substrate, it is preferable to form a cured coating one by one on either side.

Examples of the substrate include various types of coated paper, such as polyethylene laminated paper, glassine paper, woodfree paper, kraft paper, and clay coated paper; synthetic paper such as Yupo; polyethylene film; polypropylene film, such as CPP and OPP film; polyester film, such as polyethylene terephthalate (PET) film; polyamide film; polyimide film; polylactate film; polyphenol film; and polycarbonate film. The substrate may be subjected to a pretreatment, such as corona treatment, etching treatment, or plasma treatment, in order to improve adhesion between the substrate and the cured coating.

### EXAMPLES

The invention will be further described with reference to the following Examples and Comparative Examples, which should not to be construed to limit the scope of the present invention. It is noted that "part" is in mass.

Each component used in the Examples and Comparative Examples is shown below. As used hereinafter, percentage of the aryl group (%) refers to a percentage of the number of the aryl groups (Ph group in the following Examples and Comparative Examples) relative to the total number of hydrogen atoms each bonded to a silicon atoms and groups each bonded to a silicon atom (Vi, Me and Ph groups in the following Examples and Comparative Examples). It should be also noted that the sequence of the siloxane units shown below in parentheses is for illustrative purposes only, and is not limited thereto or thereby.

### Component (A)

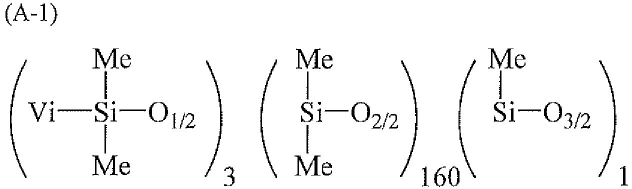

Percentage of the aryl group: 0% 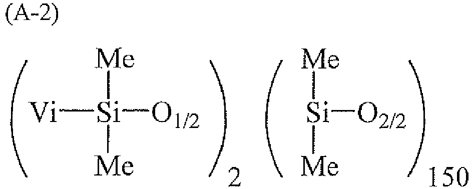 Percentage of the aryl group: 0% 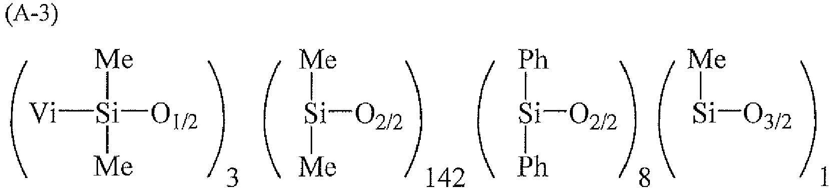 Percentage of the aryl group: 5.2% 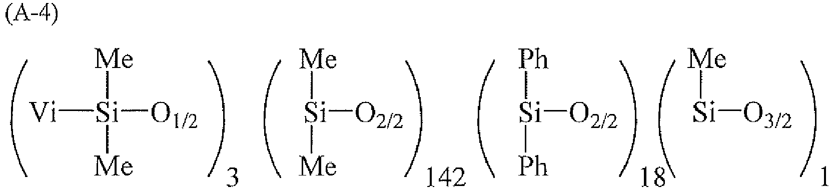 Percentage of the aryl group: 10.9% 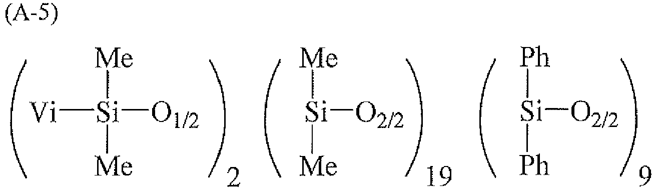 Percentage of the aryl group: 29.0%

### Component (B)

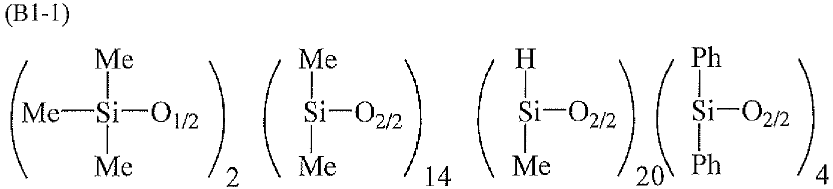

Percentage of the aryl group: 9.8% 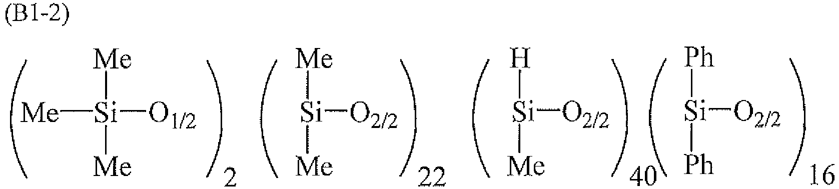 Percentage of the aryl group: 19.8% 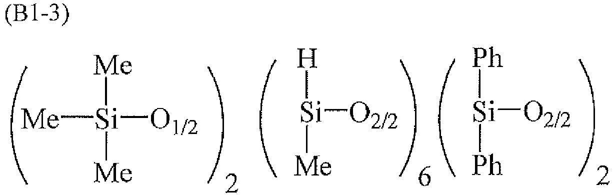 Percentage of the aryl group: 18.2% 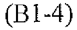 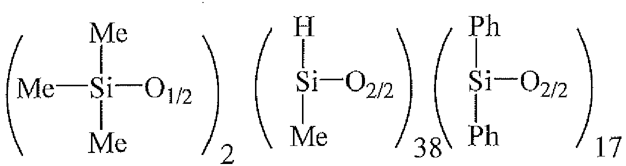 Percentage of the aryl group: 29.3% 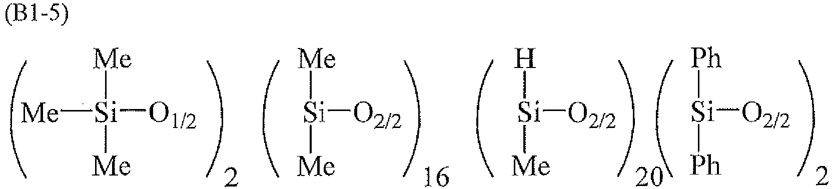 Percentage of the aryl group: 4.9% 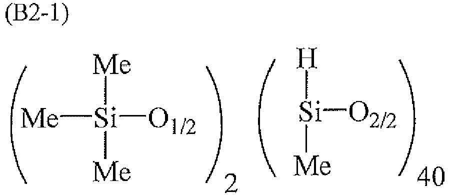 Percentage of the aryl group: 0%

### (C) Catalyst: platinum-vinyl siloxane complex

[Components for Comparative Examples: Adhesion promoter]

### (D-1) Organopolysiloxane of the following formula:

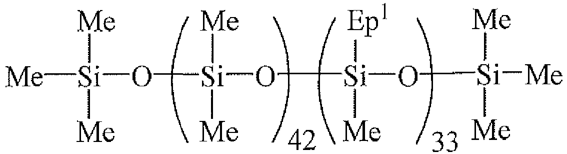

Here Ep¹ stands for 2-(3,4-epoxycyclohexyl)ethyl group, and Me stands for methyl group.

### (D-2) Epoxy group-containing organopolysiloxane

An epoxy group-containing organopolysiloxane was obtained by reacting 43% by mass of an organopolysiloxane having a viscosity of 20 mm²/s at 25°C and composed of 20 mol% of a silanol-terminated siloxane unit represented by (CH₃)₂(OH)SiO_{1/2}, 40 mol% of a methylvinylsiloxane unit represented by (CH₃)(CH₂=CH)SiO_{2/2} and 40 mol% of a dimethylsiloxane unit represented by (CH₃)₂SiO_{2/2}, with 57% by mass of 2-(3,4-epoxycyclohexyl) ethyltrimethoxysilane in the presence of potassium siliconate at 100°C for 1 hour.

The organopolysiloxane thus obtained had a viscosity of 0.6 Pa·s at 25°C, an alkenyl group content of 0.20 mol/g, an average polymerization degree of 20. A percentage of the number of the siloxane unit having epoxycyclohexyl group was 20 %, relative to the total number of the siloxane units.

### (D-3) Epoxy group-containing siloxane oligomer

An epoxy group- containing siloxane oligomer was obtained by partial hydrolytic condensation of 99.98% by mass of 3-glycidoxypropyltriethoxysilane with 0.02% by mass of water in the presence of hydrochloric acid at 100°C for 5 hours.

The siloxane oligomer had a viscosity of 0.01 Pa·s at 25°C and an average polymerization degree of 3.

### (E) Pot life extender: Ethynylcyclohexanol

### <Examples 1 to 10, and Comparative Examples 1 to 13>

Components (A), (B) and (D) were put into a flask in parts shown in Tables 1-3, and then 0.3 part of component (E) was added and stirred to dissolve. To the resulting mixture was added (C) the catalyst in an amount of 100 ppm by mass of platinum relative to the total mass of components (A) and (B), and mixed under stirring to obtain a silicone composition. This silicone composition was used for the preparation of a coated article (release film) and evaluation thereof by the procedures described below.

### <Evaluation>

### [Peeling Force]

The composition thus obtained was applied to a PET film having a thickness of 38 µm in an amount of solids of 0.5 g/m² by means of a bar coater, and cured by heating in a hot air dryer at 120°C for 40 seconds to form a release layer. The release layer was evaluated according to the FINAT method in the following procedures.

An adhesive tape of 25 mm width (TESA 7475 tape, commercially available from Tesa Tape Inc.) was applied to the surface of the release layer, and subjected to a heat treatment under a load of 20 g/cm² in a dryer at 70°C for 20 hours. After air-cooled for 30 minutes, the Tesa 7475 tape was pulled by a tensile tester at an angle of 180° and a peeling rate of 0.3 m/min to determine the force required for peeling in gf/25mm. The results are shown in Tables 1 to 3.

### [Subsequent Adhesion]

The Tesa 7475 tape which had been subjected to the peeling test described above was applied to an SUS stainless steel plate, and pressed with a 2-kg tape roller in one cycle of moving back and forth. The tape was peeled off with a tensile tester at an angle of 180° and at 0.3 m/min to determine a force F required for peeling in N/25mm. For comparison, an unused Tesa 7475 tape was applied to an SUS plate and a force F₀ required for peeling it (in N/25mm) was determined in the same manner. Subsequent adhesion (%), i.e., a percentage of the adhesion remained in the Tesa 7475 tape after the removal from the release layer, relative to the adhesion of the unused Tesa 7475 tape, was calculated by the equation: F/F₀×100. The results are shown in Tables 1 to 3.

### [Adhesion]

A release layer was formed on a PET film having a thickness of 38 µm in the same manner as described above, and stored at 25°C and 50% RH. After storing for a period of 1 day, 5 days and 30 days, the release layer was rubbed with a finger in ten strokes to see by visual inspection if the release layer was rubbed off or not, and evaluated on the following criteria. The results are shown in Tables 1 to 3.
A: no rub-off occurred after 30 days
B: no rub-off occurred after 1 day, but rub-off occurred after 5 days
C: rub-off occurred immediately after the formation of the release layer.

**Table 1**

| | | Examples | | | | | | | | | |
|---|---|---|---|---|---|---|---|---|---|---|---|
| | | 1 | 2 | 3 | 4 | 5 | 6 | 7 | 8 | 9 | 10 |
| Component (A) (parts by mass) | (A-1) | 88.8 | 87.3 | 89.2 | 89.3 | 88.0 | | | | | |
| | (A-2) | | | | | | 90.6 | | | | 93.1 |
| | (A-3) | | | | | | | 87.6 | | | |
| | (A-4) | | | | | | | | 89.1 | 86.1 | |
| | (A-5) | | | | | | | | | | |
| Component (B) (parts by mass) | (B1-1) | 11.2 | | | | | | | | | 4.8 |
| | (B1-2) | | 12.7 | | | 10.0 | 9.4 | 12.4 | 10.9 | 13.9 | |
| | (B1-3) | | | 10.8 | | | | | | | |
| | (B 1-4) | | | | 10.7 | | | | | | |
| | (B2-1) | | | | | 2.0 | | | | | 2.1 |
| Difference of aryl-group percentages [(B1)-(A)] | | 9.8 | 19.8 | 18.2 | 29.3 | 19.8 | 19.8 | 14.6 | 8.8 | 8.8 | 9.8 |
| H/Vi ratio [((B 1)+(B2))/(A)] | | 3.2 | 3.2 | 3.2 | 3.2 | 4.0 | 3.2 | 3.2 | 3.2 | 4.2 | 3.8 |
| H/Vi ratio [(B1)/(A)] | | 3.2 | 3.2 | 3.2 | 3.2 | 2.5 | 3.2 | 3.2 | 3.2 | 4.2 | 1.8 |
| Adhesion | | A | A | A | A | A | A | A | A | A | A |
| Peeling force (gf/25mm) | | 117 | 24 | 53 | 21 | 45 | 22 | 40 | 51 | 85 | 39.2 |
| Subsequent adhesion (%) | | 100 | 99 | 100 | 91 | 99 | 97 | 96 | 90 | 91 | 100 |

**Table 2**

| | | Comparative Examples | | | | | | |
|---|---|---|---|---|---|---|---|---|
| | | 1 | 2 | 3 | 4 | 5 | 6 | 7 |
| Component (A) (parts by mass) | (A-1) | 95.5 | 89.6 | | | | | |
| | (A-2) | | | | | | | |
| | (A-3) | | | 97.0 | 89.8 | 89.0 | | |
| | (A-4) | | | | | | | |
| | (A-5) | | | | | | 81.4 | 68.6 |
| Component (B) (parts by mass) | (B1-1) | | | | | 11.0 | | |
| | (B1-2) | | | | | | 18.6 | 31.4 |
| | (B1-3) | | | | | | | |
| | (B1-4) | | | | | | | |
| | (B1-5) | | 10.4 | | 10.2 | | | |
| | (B2-1) | 4.5 | | 3.0 | | | | |
| Comparative component (parts by mass) | (D-1) | | | | | | | |
| | (D-2) | | | | | | | |
| | (D-3) | | | | | | | |
| Difference of aryl-group percentages [(B1)-(A)] | | 0.0 | 4.9 | -5.2 | -0.3 | 4.6 | -9.3 | -9.3 |
| H/Vi ratio [((B1)+(B2))/(A)] | | 3.2 | 3.2 | 2.1 | 3.2 | 3.2 | 2.1 | 4.2 |
| Adhesion | | B | B | C | C | B | C | C |
| Peeling force (gf/25mm) | | 38 | 133 | 14 | 92 | 97 | 16 | 118 |
| Subsequent adhesion (%) | | 98 | 94 | 96 | 93 | 96 | 100 | 94 |

**Table 3**

| | | Comparative Examples | | | | | |
|---|---|---|---|---|---|---|---|
| | | 8 | 9 | 10 | 11 | 12 | 13 |
| Component (A) (parts by mass) | (A-1) | | | 48.7 | 97.0 | 97.0 | 97.0 |
| | (A-2) | | | 48.7 | | | |
| | (A-3) | | | | | | |
| | (A-4) | | | | | | |
| | (A-5) | 84.0 | 72.4 | | | | |
| Component (B) (parts by mass) | (B1-1) | | | | | | |
| | (B1-2) | | | | | | |
| | (B1-3) | 16.0 | 27.6 | | | | |
| | (B1-4) | | | | | | |
| | (B 1-5) | | | | | | |
| | (B2-1) | | | 2.6 | 3.0 | 3.0 | 3.0 |
| Comparative component (parts by mass) | (D-1) | | | | 1.5 | | |
| | (D-2) | | | | | 1.5 | |
| | (D-3) | | | | | | 1.5 |
| Difference of aryl-group percentages [(B1)-(A)] | | -10.9 | -10.9 | 0.0 | 0.0 | 0.0 | 0.0 |
| H/Vi ratio [((B1)+(B2))/(A)] | | 2.1 | 4.2 | 2.1 | 2.1 | 1.9 | 2.1 |
| Adhesion | | C | B | B | B | C | B |
| Peeling force (gf/25mm) | | 18 | 368 | 15 | 18 | 14 | 15 |
| Subsequent adhesion (%) | | 100 | 85 | 99 | 99 | 94 | 98 |

As shown in Tables 2 and 3 above, the silicone compositions of Comparative Examples 1 to 9 have a difference of aryl-group percentages between the organohydrogenpolysiloxane and the organopolysiloxane having alkenyl groups, which are outside the scope of the present invention. The cured coatings obtained from these silicone compositions had poor adhesion to the plastic substrate, The silicone compositions of Comparative Examples 11 to 13, which contained a conventional adhesion promoter, showed poor adhesion to the plastic substrate due to no difference in the aryl group percentages. To contrast, as can be seen from Table 1, the cured coatings obtained from the silicone compositions of the present invention had excellent adhesion to the plastic film substrate. These cured coatings also allowed the adhesive material to be peeled off from the release layer of the cured coating, while retaining high adhesion of the adhesive material after its removal.

### INDUSTRIAL APPLICABILITY

According to the present invention, the silicone composition suitably serves as a solvent-free -type releasing agent. The silicone composition can be used to form a cured coating on a surface of a substrate such as paper or plastic substrate, resulting in good adhesion to the substrate, to give release paper and release film.

## Claims

1. A silicone composition comprising:
(A) an organopolysiloxane having at least two alkenyl groups each bonded to a silicon atom in a molecule, and having no or at least one aryl group in a molecule;
(B1) an organohydrogenpolysiloxane having at least three hydrogen atoms each bonded to a silicon atom in a molecule and having an aryl group in such a number that a percentage (%) of the total number of the aryl groups relative to the total number of hydrogen atoms and groups each bonded to a silicon atom (hereinafter referred to as "percentage of the aryl group") is at least 8%, in an amount such that a ratio of the number of SiH groups in component (B1) to the number of alkenyl groups in component (A) is between 0.5 and 10; and
(C) a catalytic amount of a catalyst based on a platinum group metal;
with a proviso that [said percentage (%) of the aryl group in component (B1)] - [a percentage (%) of the total number of the aryl groups relative to the total number of groups each bonded to a silicon atom in component (A)] ≥ 8.

2. The silicone composition according to claim 1, further comprising:
(B2) an organohydrogenpolysiloxane having at least three hydrogen atoms each bonded to a silicon atom in a molecule and having no aryl group, in an amount of from 1 to 80 parts by mass relative to 100 parts by total mass of components (B1) and (B2), with a proviso that a ratio of the total number of SiH groups in components (B1) and (B2) to the number of the alkenyl groups in component (A) is between 0.5 and 10.

3. The silicone composition according to claim 1 or 2, wherein component (B1) has the following average compositional formula:
R¹ₐH_{b}SiO_{(4-a-b)/2} (1)
wherein R¹ is, independently at each occurrence, a hydroxyl group or a substituted or unsubstituted monovalent hydrocarbon group having no aliphatic unsaturated bond, with a proviso that at least 8% of the number of R¹ relative to a total number of R¹ and hydrogen atoms each bonded to a silicon atom is an aryl or aralkyl group, a and b are greater than 0, provided that a+b ≤ 3.

4. The silicone composition according to claim 3, wherein component (B1) is of the following formula (2): 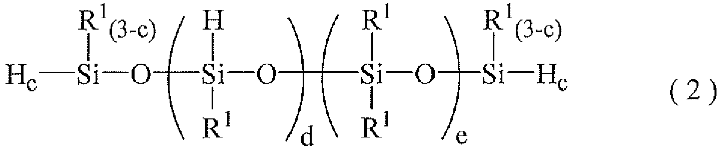 wherein R¹ is as defined above, c is 0 or 1, d is an integer of 1 or more, e is an integer of 0 or more, provided that 2c+d≥3 and 1≤d+e≤1,000.

5. The silicone composition according to any one of claims 1 to 4, wherein the ratio of the number of the SiH groups in component (B1) and the SiH groups in component (B2), if (B2) is present, to the number of the alkenyl groups in component (A) is between 1.5 and 6.

6. The silicone composition according to any one of claims 1 to 5, which is free of a solvent.

7. A release film comprising a film substrate and a layer of a cured product of the silicone composition according to any one of claims 1 to 6 on at least one surface of the film substrate.

8. Release paper comprising a paper substrate and a layer of a cured product of the silicone composition according to any one of claims 1 to 6 on at least one surface of the paper substrate.

## Patentansprüche

1. Silikonzusammensetzung, umfassend:
(A) ein Organopolysiloxan, das mindestens zwei Alkenylgruppen aufweist, die jeweils an ein Siliciumatom in einem Molekül gebunden sind, und keine oder mindestens eine Arylgruppe in einem Molekül aufweist;
(B1) ein Organowasserstoff-Polysiloxan, das mindestens drei Wasserstoffatome aufweist, die jeweils an ein Siliciumatom in einem Molekül gebunden sind, und eine Arylgruppe in einer solchen Anzahl aufweist, dass ein Prozentsatz (%) der Gesamtanzahl der Arylgruppen bezogen auf die Gesamtanzahl von Wasserstoffatomen und Gruppen, die jeweils an ein Siliciumatom gebunden sind (im Folgenden bezeichnet als "Prozentsatz der Arylgruppe"), mindestens 8 % ist, in einer solchen Menge, dass ein Verhältnis der Anzahl von SiH-Gruppen in Komponente (B1) zu der Anzahl von Alkenylgruppen in Komponente (A) zwischen 0,5 und 10 ist; und
(C) eine katalytische Menge eines Katalysators basierend auf einem Metall der Platingruppe; mit der Maßgabe, dass [der Prozentsatz (%) der Arylgruppe in Komponente (B1)] - [ein Prozentsatz (%) der Gesamtanzahl der Arylgruppen, bezogen auf die Gesamtzahl der jeweils an ein Siliciumatom gebundenen Gruppen in Komponente (A)] ≥ 8.

2. Silikonzusammensetzung nach Anspruch 1, ferner umfassend:
(B2) ein Organowasserstoff-Polysiloxan, das mindestens drei Wasserstoffatome aufweist, die jeweils an ein Siliciumatom in einem Molekül gebunden sind, und keine Arylgruppe aufweist, in einer Menge von 1 bis 80 Masseteilen bezogen auf 100 Teile der Gesamtmasse der Komponenten (B1) und (B2), mit der Maßgabe, dass das Verhältnis der Gesamtanzahl von SiH-Gruppen in den Komponenten (B1) und (B2) zu der Anzahl von Alkenylgruppen in Komponente (A) zwischen 0,5 und 10 ist.

3. Silikonzusammensetzung nach Anspruch 1 oder 2, wobei Komponente (B1) die folgende durchschnittliche Zusammensetzungsformel aufweist:
R¹ₐH_{b}SiO_{(4-a-b)/2} (1)
wobei R¹ unabhängig bei jedem Vorkommen eine Hydroxylgruppe oder eine substituierte oder unsubstituierte einwertige Kohlenwasserstoffgruppe ist, die keine aliphatische ungesättigte Bindung aufweist, mit einer Maßgabe, dass mindestens 8 % der Anzahl von R¹ bezogen auf eine Gesamtanzahl von R¹ und Wasserstoffatomen, die jeweils an ein Siliciumatom gebunden sind, eine Aryl- oder Aralkylgruppe ist, a und b größer sind als 0, vorausgesetzt, dass a+b ≤ 3.

4. Silikonzusammensetzung nach Anspruch 3, wobei Komponente (B1) von der folgenden Formel (2) ist: 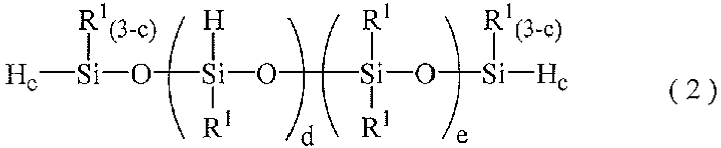 wobei R¹ wie oben definiert ist, c 0 oder 1 ist, d eine ganze Zahl von 1 oder mehr ist, e eine ganze Zahl von 0 oder mehr ist, vorausgesetzt, dass 2c+d≥3 und 1≤d+e≤1000.

5. Silikonzusammensetzung nach einem der Ansprüche 1 bis 4, wobei das Verhältnis der Anzahl der SiH-Gruppen in Komponente (B1) und der SiH-Gruppen in Komponente (B2), wenn (B2) vorhanden ist, zur Anzahl der Alkenylgruppen in Komponente (A) zwischen 1,5 und 6 ist.

6. Silikonzusammensetzung nach einem der Ansprüche 1 bis 5, die frei von einem Lösungsmittel ist.

7. Freisetzungsfolie, umfassend ein Foliensubstrat und eine Schicht eines gehärteten Produkts der Silikonzusammensetzung nach einem der Ansprüche 1 bis 6 auf mindestens einer Oberfläche des Foliensubstrats.

8. Freisetzungspapier, umfassend ein Papiersubstrat und eine Schicht eines gehärteten Produkts der Silikonzusammensetzung nach einem der Ansprüche 1 bis 6 auf mindestens einer Oberfläche des Papiersubstrats.

## Revendications

1. Composition de silicone comprenant :
(A) un organopolysiloxane ayant au moins deux groupes alcényle liés chacun à un atome de silicium dans une molécule, et n'ayant pas ou ayant au moins un groupe aryle dans une molécule ;
(B1) un organohydrogénopolysiloxane ayant au moins trois atomes d'hydrogène liés chacun à un atome de silicium dans une molécule et ayant un groupe aryle en un nombre tel qu'un pourcentage (%) du nombre total des groupes aryle par rapport au nombre total d'atomes et de groupes hydrogène liés chacun à un atome de silicium (ci-après dénommé « pourcentage du groupe aryle ») soit d'au moins 8 %, en une quantité telle qu'un rapport du nombre de groupes SiH dans le composant (B1) au nombre des groupes alcényle dans le composant (A) soit compris entre 0,5 et 10 ; et
(C) une quantité catalytique d'un catalyseur basé sur un métal du groupe du platine ;
à condition que [ledit pourcentage (%) du groupe aryle dans le composant (B1)] - [un pourcentage (%) du nombre total des groupes aryle par rapport au nombre total de groupes liés chacun à un atome de silicium dans le composant (A)] ≥ 8.

2. Composition de silicone selon la revendication 1, comprenant en outre :
(B2) un organohydrogénopolysiloxane ayant au moins trois atomes d'hydrogène liés chacun à un atome de silicium dans une molécule et n'ayant pas de groupe aryle, en une quantité de 1 à 80 parties en masse par rapport à 100 parties en masse totale des composants (B1) et (B2), à condition qu'un rapport du nombre total de groupes SiH dans les composants (B1) et (B2) au nombre des groupes alcényle dans le composant (A) soit compris entre 0,5 et 10.

3. Composition de silicone selon la revendication 1 ou 2, dans laquelle le composant (B1) a la formule de composition moyenne suivante :
R¹ₐH_{b}SiO_{(4-a-b)/2} (1)
où R¹ est, indépendamment à chaque occurrence, un groupe hydroxyle ou un groupe hydrocarboné monovalent substitué ou non substitué n'ayant pas de liaison insaturée aliphatique, à condition qu'au moins 8 % du nombre de R¹ par rapport à un nombre total de R¹ et des atomes d'hydrogène liés chacun à un atome de silicium soit un groupe aryle ou aralkyle, a et b sont supérieurs à 0, à condition que a+b ≤ 3.

4. Composition de silicone selon la revendication 3, dans laquelle le composant (B1) répond à la formule (2) suivante : 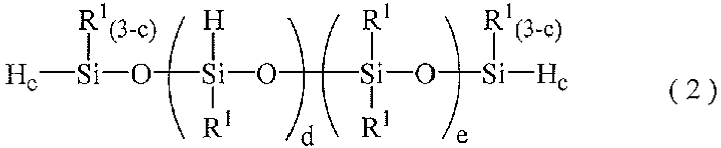 où R¹ est tel que défini ci-dessus, c est 0 ou 1, d est un entier de 1 ou plus, e est un entier de 0 ou plus, à condition que 2c+d≥3 et 1≤d+e≤1 000.

5. Composition de silicone selon l'une quelconque des revendications 1 à 4, dans laquelle le rapport du nombre des groupes SiH dans le composant (B1) et des groupes SiH dans le composant (B2), si (B2) est présent, au nombre des groupes alcényle dans le composant (A) est compris entre 1,5 et 6.

6. Composition de silicone selon l'une quelconque des revendications 1 à 5, qui est exempte de solvant.

7. Film anti-adhésif comprenant un substrat de film et une couche d'un produit durci de la composition de silicone selon l'une quelconque des revendications 1 à 6 sur au moins une surface du substrat de film.

8. Papier antiadhésif comprenant un substrat en papier et une couche d'un produit durci de la composition de silicone selon l'une quelconque des revendications 1 à 6 sur au moins une surface du substrat de papier.
